# EUROPEAN PATENT APPLICATION

(11) **EP 3 719 401 A1**
(43) Date of publication of application: **07.10.2020**
(21) Application number: 20168080.8
(22) Date of filing: 03.04.2020
(51) Int. Cl.: F23R 3/00, F23R 3/50

(54) **NON-AXISYMMETRIC COMBUSTOR FOR IMPROVED DURABILITY**

(30) Priority: 04.04.2019 US 201916375018
(71) Applicant: Raytheon Technologies Corporation, Farmington, CT 06032 (US)
(72) Inventor: KALITZIN, Georgi, West Hartford, Connecticut 06107 (US); MEDIC, Gorazd, West Hartford, Connecticut 06107 (US); SHARMA, Om P., South Windsor, Connecticut 06074 (US); SNYDER, Timothy S., Glastonbury, Connecticut 06033 (US); FULTON, III, Graham B., Ellington, Connecticut 06029 (US)
(74) Representative: Dehns

(57) **Abstract**

A combustor for use in a gas turbine engine including: a radially inward heat shield panel (400a); and a radially outward heat shield panel (400b) located radially outward of the radially inward heat shield panel, the radially inward heat shield panel and the radially outward heat shield panel being in a facing spaced relationship defining a combustion chamber (302) therebetween, wherein at least one of the radially inward heat shield panel and the radially outward heat shield panel has a non-axisymmetric shape.

## Description

### BACKGROUND

The subject matter disclosed herein generally relates to gas turbine engines and, more particularly, to a method and apparatus for mitigating high heat loads adjacent to cooling surfaces of gas turbine engines.

In one example, a combustor of a gas turbine engine may be configured to burn fuel in a minimum volume. Such configurations may place substantial heat load on the structure of the combustor (e.g., heat shield panels, combustion shells, etc.). Such heat loads may dictate that special consideration is given to structures, which may be configured as heat shields or panels, and to the cooling of such structures to protect these structures. Excess temperatures at these structures may lead to oxidation, cracking, and high thermal stresses of the heat shields panels.

### SUMMARY

According to an embodiment, a combustor for use in a gas turbine engine is provided. The combustor includes: a radially inward heat shield panel; and a radially outward heat shield panel located radially outward of the radially inward heat shield panel, the radially inward heat shield panel and the radially outward heat shield panel being in a facing spaced relationship defining a combustion chamber therebetween, wherein at least one of the radially inward heat shield panel and the radially outward heat shield panel has a non-axisymmetric shape.

In addition to one or more of the features described above, or as an alternative, further embodiments may include that the radially inward heat shield panel has a non-axisymmetric shape.

In addition to one or more of the features described above, or as an alternative, further embodiments may include that the radially outward heat shield panel has a non-axisymmetric shape.

In addition to one or more of the features described above, or as an alternative, further embodiments may include that the radially outward heat shield panel has a non-axisymmetric shape.

In addition to one or more of the features described above, or as an alternative, further embodiments may include that the radially inward heat shield panel has an axisymmetric shape.

In addition to one or more of the features described above, or as an alternative, further embodiments may include that the radially outward heat shield panel has an axisymmetric shape.

In addition to one or more of the features described above, or as an alternative, further embodiments may include that at least one of the radially inward heat shield panel and the radially outward heat shield panel is linearly shaped.

In addition to one or more of the features described above, or as an alternative, further embodiments may include that at least one of the radially inward heat shield panel and the radially outward heat shield panel is non-linearly shaped.

In addition to one or more of the features described above, or as an alternative, further embodiments may include a plurality of fuel injectors oriented circumferentially around center line of the combustor, each of the fuel injectors including a pilot nozzle projecting into the combustion chamber, wherein a fuel injector nozzle plane is located at a circumferential location of each of the plurality of fuel injectors and a distance between the radially outward heat shield panel and the radially inward heat shield panel is at a maximum proximate the fuel injector nozzle plane.

In addition to one or more of the features described above, or as an alternative, further embodiments may include that a fuel injector nozzle midpoint radial plane is located at a circumferential location between two of the fuel nozzle planes and a distance between the radially outward heat shield panel and the radially inward heat shield panel is at a minimum proximate the fuel injector nozzle midpoint radial plane.

According to another embodiment, a combustor for use in a gas turbine engine is provided. The combustor includes: a radially inward combustor shell; and a radially outward combustor shell located radially outward of the radially inward combustor shell, the radially inward combustor shell and the radially outward combustor shell being in a facing spaced relationship defining a combustion chamber therebetween, wherein at least one of the radially inward combustor shell and the radially outward combustor shell has a non-axisymmetric shape.

In addition to one or more of the features described above, or as an alternative, further embodiments may include that the radially inward combustor shell has a non-axisymmetric shape.

In addition to one or more of the features described above, or as an alternative, further embodiments may include that the radially outward combustor shell has a non-axisymmetric shape.

In addition to one or more of the features described above, or as an alternative, further embodiments may include that the radially outward combustor shell has a non-axisymmetric shape.

In addition to one or more of the features described above, or as an alternative, further embodiments may include that the radially inward combustor shell has an axisymmetric shape.

In addition to one or more of the features described above, or as an alternative, further embodiments may include that the radially outward combustor shell has an axisymmetric shape.

In addition to one or more of the features described above, or as an alternative, further embodiments may include that at least one of the radially inward combustor shell and the radially outward combustor shell is linearly shaped.

In addition to one or more of the features described above, or as an alternative, further embodiments may include that at least one of the radially inward combustor shell and the radially outward combustor shell is non-linearly shaped.

In addition to one or more of the features described above, or as an alternative, further embodiments may include a plurality of fuel injectors oriented circumferentially around center line of the combustor, each of the fuel injectors including a pilot nozzle projecting into the combustion chamber, wherein a fuel injector nozzle plane is located at a circumferential location of each of the plurality of fuel injectors and a distance between the radially outward combustor shell and the radially inward combustor shell is at a maximum proximate the fuel injector nozzle plane.

According to another embodiment, a method of designing an annular combustor for a gas turbine engine is provided. The method includes the steps of: identifying one or more hot zones in the combustion chamber that have a higher temperature than one or more cold zones in the combustion chamber; identifying a nominal shape of a surface of the annular combustor defined by one or more axisymmetric combustor panels arranged circumferentially; providing at least one non-axisymmetric heat-shield panel; positioning a portion of the non-axisymmetric heat shield panel closer to the combustion chamber than nominal near one of the cold zones; and positioning a portion of the non-axisymmetric heat shield panel further from the combustion chamber than nominal near one of the hot zones.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should be considered exemplary. With reference to the accompanying drawings, like elements are numbered alike:
FIG. 1 is a partial cross-sectional illustration of a gas turbine engine;
FIG. 2 is a cross-sectional illustration of a combustor;
FIG. 3 is an axial cross-sectional illustration of a conventional combustor of FIG. 2;
FIG. 4 is a heat map of the axial cross-sectional illustration of a conventional combustor of FIG. 3;
FIG. 5 is an axial cross-sectional illustration of a combustor having non-axisymmetric planar heat shield panels, in accordance with an embodiment of the disclosure;
FIG. 6 is an axial cross-sectional illustration of a combustor having non-axisymmetric planar heat shield panels, in accordance with an embodiment of the disclosure;
FIG. 7 is an axial cross-sectional illustration of a combustor having non-axisymmetric planar heat shield panels, in accordance with an embodiment of the disclosure;
FIG. 8 is an axial cross-sectional illustration of a combustor having non-axisymmetric piece-wise planar heat shield panels, in accordance with an embodiment of the disclosure;
FIG. 9 is an axial cross-sectional illustration of a combustor having non-axisymmetric piece-wise planar heat shield panels, in accordance with an embodiment of the disclosure;
FIG. 10 is an axial cross-sectional illustration of a combustor having non-axisymmetric optimized-round heat shield panels, in accordance with an embodiment of the disclosure; and
FIG. 11 is an axial cross-sectional illustration of a combustor having axisymmetric heat shield panels with fillets in cold regions, in accordance with an embodiment of the disclosure.

The detailed description explains embodiments of the present disclosure, together with advantages and features, by way of example with reference to the drawings.

### DETAILED DESCRIPTION

A detailed description of one or more embodiments of the disclosed apparatus and method are presented herein by way of exemplification and not limitation with reference to the Figures.

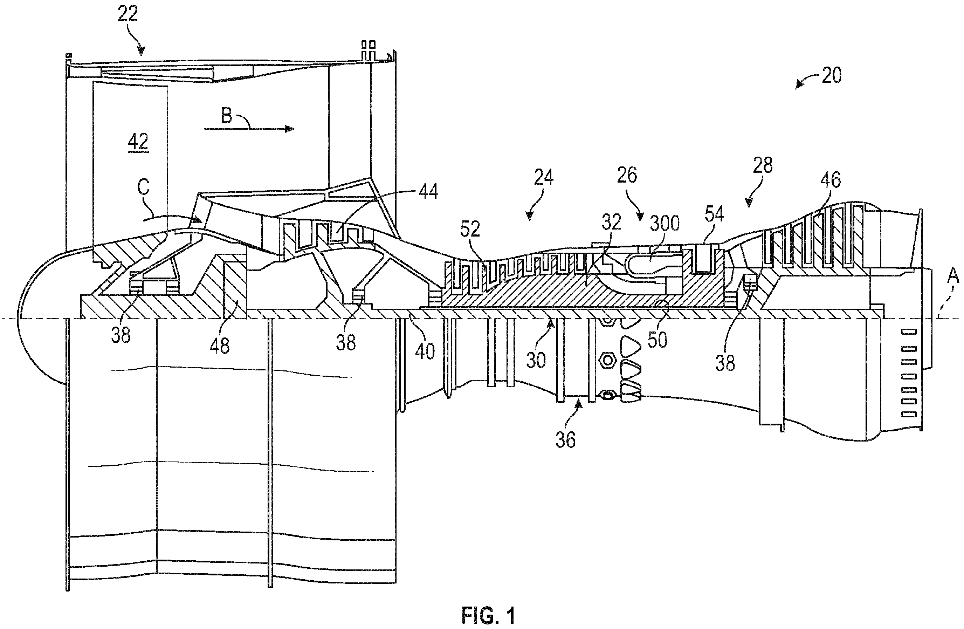

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 300 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 300, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

Combustors of gas turbine engines, as well as other components, experience elevated heat levels during operation. Impingement and convective cooling of heat shield panels of the combustor wall may be used to help cool the combustor. Convective cooling may be achieved by air that is channeled between the heat shield panels and a combustion shell of the combustor. Impingement cooling may be a process of directing relatively cool air from a location exterior to the combustor toward a back or underside of the heat shield panels.

Thus, combustion shells and heat shield panels are utilized to face the hot products of combustion within a combustion chamber and protect the overall combustor shell. The combustion shells may be supplied with cooling air including dilution passages which deliver a high volume of cooling air into a hot flow path. The cooling air may be air from the compressor of the gas turbine engine. The cooling air may impinge upon a back side of a heat shield panel that faces a combustion shell inside the combustor.

Reduced volume combustor designs are aimed at reducing emissions and may outperform conventional combustors when it comes to NOₓ reduction and efficiency. However with reduced volume combustor designs, the heat shield panels and combustion shell are pushed closer to the combustion area and thus incur increased exposure to elevated temperatures. Analysis shows that a region of highest temperatures on the heat shield panels is along the planes of the swirler/fuel nozzle. At the same time, the temperature is much lower mid-way between two fuel nozzles. Embodiments disclosed herein seek to take advantage of this nonuniformity of temperatures in the circumferential direction with the design of a non-axisymmetric combustor shell geometry and/or heat shield panel that keeps the cross section area and consequently the volume of the combustor unchanged.

Axisymmetric may be defined as symmetrical about an axis or having the same radius about an axis. For example, a circle is axisymmetric around an axis because it has the same radius around an axis. An axisymmetric combustor shell has the same radius around an engine longitudinal axis A and an axisymmetric heat shield has the same radius around the engine longitudinal axis A. Conversely non-axisymmetric may be defined as non-symmetrical about an axis or having a different radius about an axis. For example an oval, triangle, square, rectangle, pentagon, hexagon...etc. do not have the same radius around an axis. A non-axisymmetric combustor shell has a different radius around an engine longitudinal axis A and a non-axisymmetric heat shield has a different radius around the engine longitudinal axis A.

The embodiments disclosed herein may move combustion shell and heat shield panels away from the swirl in hot regions and to move the combustion shell and heat shield panels closer to the swirl in low temperature regions while keeping the cross section area unchanged. In addition, the combustion shell and heat shield panels are modified such that they create a more convex geometrical shape surrounding the swirl, which interferes less with the round shape of the swirl.

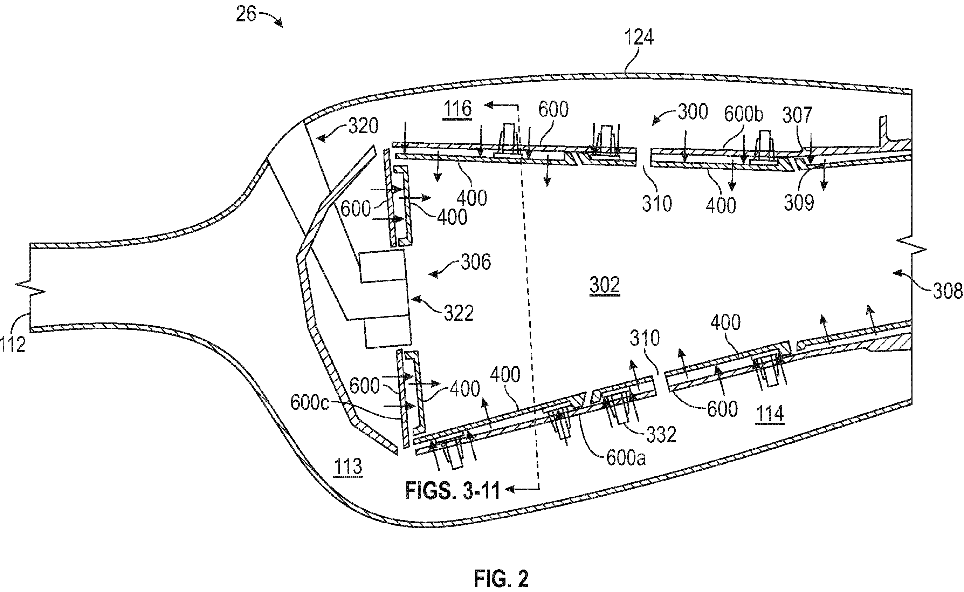

Referring now to FIG. 2 and with continued reference to FIG. 1, the combustor section 26 of the gas turbine engine 20 is shown. The combustor 300 of FIG. 2 is an impingement film float wall combustor. It is understood that while an impingement film float wall combustor is utilized for exemplary illustration, the embodiments disclosed herein may be applicable to other types of combustors for gas turbine engines including but not limited to double pass liner combustors and float wall combustors. As illustrated, a combustor 300 defines a combustion chamber 302. The combustion chamber 302 includes a combustion area 370 within the combustion chamber 302. The combustor 300 includes an inlet 306 and an outlet 308 through which air may pass. The air may be supplied to the combustor 300 by a pre-diffuser 110. Air may also enter the combustion chamber 302 through other holes in the combustor 300 including but not limited to quench holes 310, as seen in FIG. 2.

Compressor air is supplied from the compressor section 24 into a pre-diffuser 112, which then directs the airflow toward the combustor 300. The combustor 300 and the pre-diffuser 110 are separated by a dump region 113 from which the flow separates into an inner shroud 114 and an outer shroud 116. As air enters the dump region 113, a portion of the air may flow into the combustor inlet 306, a portion may flow into the inner shroud 114, and a portion may flow into the outer shroud 116.

The air from the inner shroud 114 and the outer shroud 116 may then enter the combustion chamber 302 by means of one or more impingement holes 307 in the combustion shell 600 and one or more secondary apertures 309 in the heat shield panels 400. The impingement holes 307 and secondary apertures 309 may include nozzles, holes, etc. The air may then exit the combustion chamber 302 through the combustor outlet 308. At the same time, fuel may be supplied into the combustion chamber 302 from a fuel injector 320 and a pilot nozzle 322, which may be ignited within the combustion chamber 302. The combustor 300 of the engine combustion section 26 may be housed within diffuser cases 124 which may define the inner shroud 114 and the outer shroud 116.

The combustor 300, as shown in FIG. 2, includes multiple heat shield panels 400 that are attached to one or more shells 600. The heat shield panels 400 may be arranged parallel to the shell 600. The shell 600 includes a radially inward shell 600a and a radially outward shell 600b in a facing spaced relationship defining the combustion chamber 300 therebetween. The shell 600 also includes a forward shell 600c extending between the radially inward shell 600a and the radially outward shell 600b. The forward shell 600c further bounds the combustion chamber 300 on a forward end. The radially inward shell 600a and the radially outward shell 600b extend circumferentially around the longitudinal engine axis A. The radial inward shell 600a is located radially inward from the radially outward shell 600b.

The heat shield panels 400 can be removably mounted to the shell 600 by one or more attachment mechanisms 332. In some embodiments, the attachment mechanism 332 may be integrally formed with a respective heat shield panel 400, although other configurations are possible. In some embodiments, the attachment mechanism 332 may be a threaded mounting stud or other structure that may extend from the respective heat shield panel 400 through the interior surface to a receiving portion or aperture of the shell 600 such that the heat shield panel 400 may be attached to the shell 600 and held in place. The heat shield panels 400 partially enclose a combustion area 370 within the combustion chamber 302 of the combustor 300.

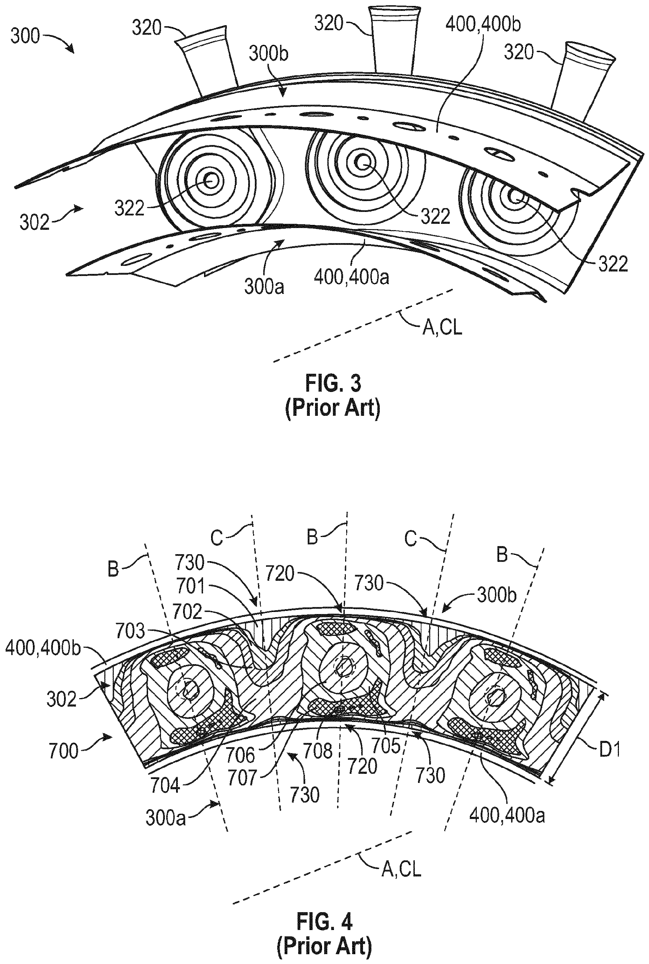

Referring now to FIGS. 3-4, with continued reference to FIGS. 1 and 2, an axial view of a section of the combustor 300 is illustrated in FIG. 3 and a heat map 700 of the section of the combustor 300 of FIG. 2 in operation is illustrated in FIG. 4. FIG. 3 illustrates a conventional combustor 300 used in gas turbine engines 20. It is understood that FIG. 3 only illustrates a circumferential section of the combustor 300 and the combustor 300 extends three-hundred and sixty degrees around the engine central longitudinal axis A or a center line CL of the combustor 300. When the combustor 300 is installed in the gas turbine engine the center line CL and the engine central longitudinal axis A may be the same or equivalent. The combustor 300 illustrated in FIG. 3 includes a plurality of fuel injectors 320 each having a pilot nozzle 322 located within the combustion chamber 300. The pilot nozzles are each directed towards the combustion area 302 of the combustion chamber 300. The pilot nozzles 322 are each axisymmetric around the engine central longitudinal axis A of the gas turbine engine 20. The heat shield panel 400 extends three-hundred and sixty degrees around the center line CL. As shown in FIG. 3, there are heat shield panels 400 located on a radially inward portion 300a of the combustor 300 and there are heat shield panels 400 located on a radially outward portion 300b of the combustor 300. The heat shield panels 400 located on the radially inward portion 300a shall be henceforth referred to as radially inward heat shield panels 400a and the heat shield panels 400 located on the radially outward portion 300b shall be henceforth referred to as radially outward heat shield panels 400b. The radially inward heat shield panels 400a and the radially outward heat shield panels 400b are parallel to each other and define a combustion chamber 302 therebetween. Each of the radially inward heat shield panels 400a are each axisymmetric around the engine central longitudinal axis A of the gas turbine engine 20. For example, the radially inward heat shield panels 400a form a circle around the center line CL. Each of the radially outward heat shield panels 400b are each axisymmetric around the center line CL. For example, the heat shield panels 400 on the radially outward portion 300b form a circle around the center line CL.

FIG. 4 illustrates a heat map 700 of the combustion area 302 of the combustor 300 of FIG. 3 during operation of the combustor 300. As aforementioned the combustion area 302 is interposed between heat shield panels 400. The heat map 700 illustrates eight different heat zones that includes a first heat zone 701, a second heat zone 702, a third heat zone 703, a fourth heat zone 704, a fifth heat zone 705, a sixth heat zone 706, a seventh heat zone 707, and an eighth heat zone 708. The eighth heat zone 708 is the hottest heat zone and the first heat zone 701 is the coolest heat zone. The second heat zone 702 is hotter than the first heat zone 703. The third heat zone 703 is hotter than the second heat zone 702. The fourth heat zone 704 is hotter than the third heat zone 703. The fifth heat zone 705 is hotter than the fourth heat zone 704. The sixth heat zone 706 is hotter than the fifth heat zone 705. The seventh heat zone 707 is hotter than the sixth heat zone 706. The eighth heat zone 708 is hotter than the seventh heat zone 707. It is understood that the heat zone 701-708 are illustrative and there may be more or less heat zones to increase or decrease fidelity of the heat map 700.

As shown in FIG. 4 at 720, hotter regions (e.g., the sixth heat zone 706, the seventh heat zone 707, and the eighth heat zone 708) are located proximate the inner heat shield panels 400 and proximate a fuel injector nozzle radial plane B. The fuel injector nozzle plane B may extend radially outward from the engine central longitudinal axis A. The fuel injector nozzle plane B is aligned with the pilot nozzle 322 of the fuel injectors 320 and may bisect the pilot nozzle 322, as shown in FIG. 4.

As also shown in FIG. 4 at 730, cooler regions (e.g., the first heat zone 701, the second heat zone 702, and the third heat zone 703) are located proximate the outer heat shield panels 400 and proximate a fuel injector nozzle midpoint radial plane C. The fuel injector nozzle midpoint radial plane C may extend radially outward from the engine central longitudinal axis A. The fuel injector nozzle midpoint radial plane C is located about halfway between two adjacent fuel injector nozzle planes B as measured circumferentially around the engine central longitudinal axis A, as shown in FIG. 4.

The radially outward heat shield panel 400b is located at first distance D1 away from the radially inward heat shield panel 400a. In conventional combustors 300, the panels 400 and shells 600 are axisymmetric such that the first distance D1 is constant (i.e., remains the same) around the center line CL.

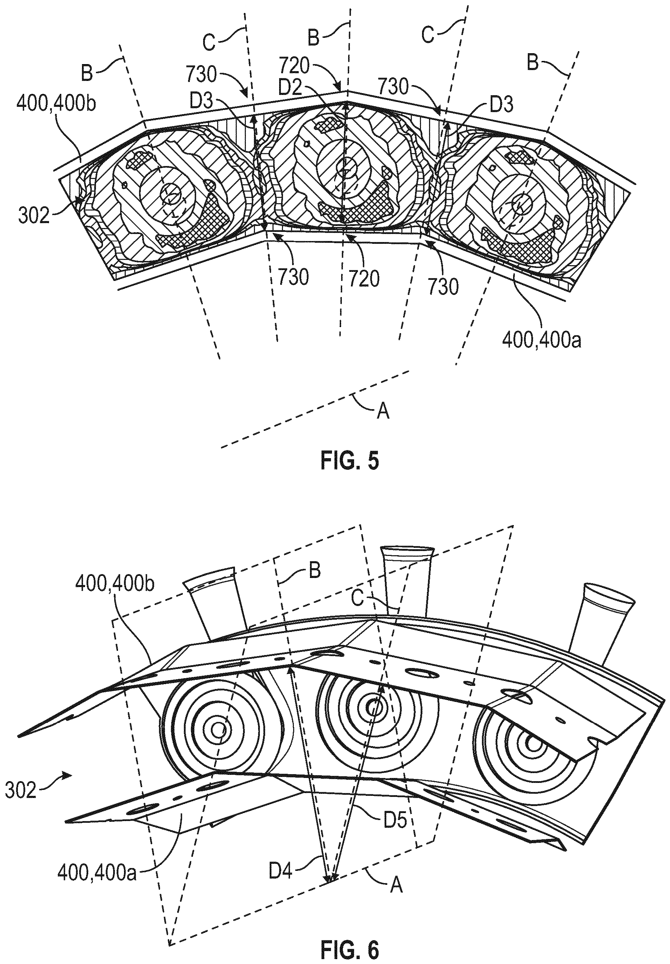

Referring now to FIGS. 5-6, within continued reference to FIGS. 1-4, a non-axisymmetric shaped heat shield panel 400 is illustrated, in accordance with an embodiment of the present disclosure. The non-axisymmetric shape may be relative to the engine central longitudinal axis A or the center line CL of the combustor 300. The embodiments disclosed herein seek to adjust the distance (e.g., the first distance D1 of FIG. 4) between the radially outward heat shield panel 400b and the radially inward heat shield panel 400a. The embodiments disclosed herein seek to make the first distance D1 variable around the circumference (or around three-hundred sixty degrees) between the radially outward heat shield panel 400b and the radially inward heat shield panel 400a.

In embodiment, the distance (originally the first distance D1) between the radially outward heat shield panel 400b and the radially inward heat shield panel 400a may be extended to a second distance D2 proximate the fuel injector nozzle plane B. The second distance D2 is greater than the first distance D1. Advantageously, by increasing the distance between the radially outward heat shield panel 400b and the radially inward heat shield panel 400a proximate the fuel injector nozzle plane B the heat shield panels 400 are moved away from the hotter regions at 720. The distance between the radially outward heat shield panel 400b and the radially inward heat shield panel 400a may be at a maximum proximate the fuel injector nozzle plane B.

In embodiment, the distance (originally the first distance D1) between the radially outward heat shield panel 400b and the radially inward heat shield panel 400a may be reduced to a third distance D3 proximate the fuel injector nozzle midpoint radial plane C. The third distance D3 is greater than the first distance D1. The distance between the radially outward heat shield panel 400b and the radially inward heat shield panel 400a may be at a minimum proximate the fuel injector nozzle midpoint radial plane C. Advantageously, by decreasing the distance between the radially outward heat shield panel 400b and the radially inward heat shield panel 400a proximate the fuel injector nozzle midpoint radial plane C the heat shield panels 400 are moved towards the cooler regions at 730. Advantageously, by increasing the first distance D1 to the second distance D2 proximate the fuel injector nozzle plane B and decreasing the first distance D1 to the third distance D3 proximate the fuel injector nozzle midpoint radial plane C allows the cross-sectional area of the combustor 300 to remain the same, and if the same is done for the full length of the combustor, that would mean that the combustor volume would remain the same, which maintains the combustor 300 performance.

As shown in FIG. 6, the non-axisymmetric shaped heat shield panels 400a, 400b are not axisymmetric around the center line CL or engine central longitudinal axis A of the gas turbine engine 20. Each of the radially inward heat shield panels 400a are each not axisymmetric around the center line CL or engine central longitudinal axis A of the gas turbine engine 20. For example, the radially inward heat shield panels 400a do not form a circle or equidistant shape around the center line CL or the engine central longitudinal axis A of the gas turbine engine 20. Each of the radially outward heat shield panels 400b are each axisymmetric around center line CL or the engine central longitudinal axis A of the gas turbine engine 20. For example, the radially outward heat shield panels 400b do not form a circle or equidistant shape around the engine central longitudinal axis A of the gas turbine engine 20. Further, as shown in FIG. 6, the radially outward heat shield panel 400b is located at a fourth distance D4 away from the center line CL proximate the fuel injector nozzle plane B and the radially outward heat shield panel 400b is located at a fifth distance D5 away from the center line CL proximate the fuel injector nozzle midpoint radial plane C. The fourth distance D4 being greater than the fifth distance D5.

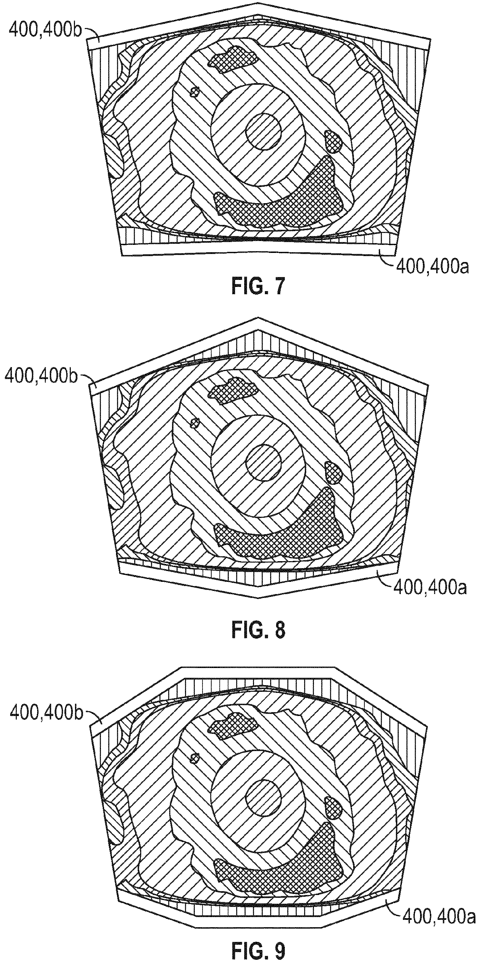

Referring now to FIGS. 7-11, within continued reference to FIGS. 1-6, different configurations of the non-axisymmetric shaped heat shield panel 400 is illustrated, in accordance with an embodiment of the present disclosure. In an embodiment, at least one of the radially inward heat shield panel 400a and the radially outward heat shield panel 400b has a non-axisymmetric shape. It is understood, that the shapes discussed herein may apply to one or both of the radially inward heat shield panel 400a and the radially outward heat shield panel 400b.

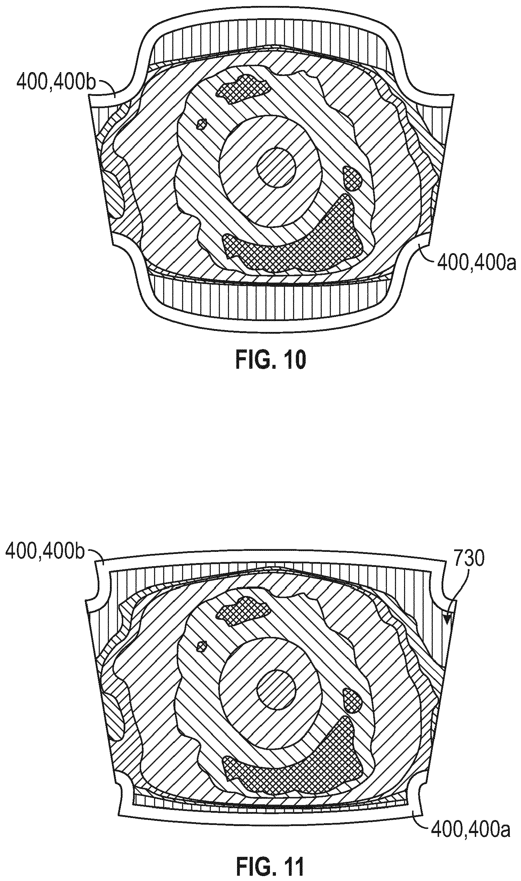

In an embodiment, at least one of the radially inward heat shield panel 400a and the radially outward heat shield panel 400b is linearly shaped. In the embodiment illustrated in FIG. 7, the radially inward heat shield panel 400a is axisymmetric shaped and the radially outward heat shield panel 400b has a non-axisymmetric shape. In the embodiment illustrated in FIG. 7, the radially outward heat shield panel 400b has a non-axisymmetric and linear shape. In the embodiment illustrated in FIG. 8, the radially inward heat shield panel 400a and the radially outward heat shield panel 400b have a non-axisymmetric piece-wise planar shape. In the embodiment illustrated in FIG. 9, at least one of the radially inward heat shield panel 400a and the radially outward heat shield panel 400b may have a trapezoidal shape. In the embodiment illustrated in FIG. 10, at least one of the radially inward heat shield panel 400a and the radially outward heat shield panel 400b may have an optimized round shape.

In the embodiment illustrated in FIG. 11, at least one of the radially inward heat shield panel 400a and the radially outward heat shield panel 400b may have a linear shape with fillets in cooler regions at 730.

It is understood the embodiments disclosed herein are also applicable to other shaped heat shield panels that are non-axisymmetric, which are not listed herein.

It is also understood that while the embodiments disclosed herein are discussed mainly in relation to the heat shield panels 400 of the combustor 300, the embodiments disclosed herein may be equally applicable to the combustor shell 600 of the combustor 300. For example, the combustion shell 600 may also be moved away from the swirl in hot regions and closer to the swirl in low temperature regions, while keeping the cross section area unchanged.

Technical effects of embodiments of the present disclosure include increasing separation distance between heat shield panels in hot areas while decreasing separation distance in cool areas to maintain the same cross-sectional area of the combustion chamber.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A combustor (300) for use in a gas turbine engine (20), the combustor comprising:
a radially inward heat shield panel (400a); and
a radially outward heat shield panel (400b) located radially outward of the radially inward heat shield panel, the radially inward heat shield panel and the radially outward heat shield panel being in a facing spaced relationship defining a combustion chamber (302) therebetween,
wherein at least one of the radially inward heat shield panel and the radially outward heat shield panel has a non-axisymmetric shape.

2. The combustor of claim 1, wherein the radially inward heat shield panel (400a) has a non-axisymmetric shape and/or the radially outward heat shield panel (400b) has a non-axisymmetric shape.

3. The combustor of claim 1, wherein the radially inward heat shield panel (400a) has an axisymmetric shape or the radially outward heat shield panel (400b) has an axisymmetric shape.

4. The combustor of any preceding claim, wherein at least one of the radially inward heat shield panel (400a) and the radially outward heat shield panel (400b) is linearly shaped.

5. The combustor of any preceding claim, wherein at least one of the radially inward heat shield panel (400a) and the radially outward heat shield panel (400b) is non-linearly shaped.

6. The combustor of any preceding claim, further comprising:
a plurality of fuel injectors (320) oriented circumferentially around center line (CL) of the combustor (300), each of the fuel injectors including a pilot nozzle (322) projecting into the combustion chamber (302), wherein a fuel injector nozzle plane (B) is located at a circumferential location of each of the plurality of fuel injectors and a distance (D2) between the radially outward heat shield panel (400b) and the radially inward heat shield panel (400a) is at a maximum proximate the fuel injector nozzle plane.

7. The combustor of any preceding claim, wherein a fuel injector nozzle midpoint radial plane (C) is located at a circumferential location between two of the fuel nozzle planes (B) and a distance (D3) between the radially outward heat shield panel (400b) and the radially inward heat shield panel (400a) is at a minimum proximate the fuel injector nozzle midpoint radial plane.

8. A combustor (300) for use in a gas turbine engine (20), the combustor comprising:
a radially inward combustor shell (600a); and
a radially outward combustor shell (600b) located radially outward of the radially inward combustor shell, the radially inward combustor shell and the radially outward combustor shell being in a facing spaced relationship defining a combustion chamber therebetween,
wherein at least one of the radially inward combustor shell and the radially outward combustor shell has a non-axisymmetric shape.

9. The combustor of claim 8, wherein the radially inward combustor shell (600a) has a non-axisymmetric shape and/or the radially outward combustor shell (600b) a non-axisymmetric shape.

10. The combustor of claim 8, wherein the radially inward combustor shell (600a) has an axisymmetric shape or the radially outward combustor shell (600b) has an axisymmetric shape.

11. The combustor of any of claims 8 to 10, wherein at least one of the radially inward combustor shell (600a) and the radially outward combustor shell (600b) is linearly shaped.

12. The combustor of any of claims 8 to 11, wherein at least one of the radially inward combustor shell (600a) and the radially outward combustor shell (600b) is non-linearly shaped.

13. The combustor of any of claims 8 to 12, further comprising:
a plurality of fuel injectors (320) oriented circumferentially around center line (CL) of the combustor, each of the fuel injectors including a pilot nozzle (322) projecting into the combustion chamber (302), wherein a fuel injector nozzle plane (B) is located at a circumferential location of each of the plurality of fuel injectors and a distance (D2) between the radially outward combustor shell (600b) and the radially inward combustor shell (600a) is at a maximum proximate the fuel injector nozzle plane.

14. The combustor of any of claims 8 to 13, wherein a fuel injector nozzle midpoint radial plane (C) is located at a circumferential location between two of the fuel nozzle planes (B) and a distance (D3) between the radially outward combustor shell (600) and the radially inward combustor shell (600) is at a minimum proximate the fuel injector nozzle midpoint radial plane.

15. A method of designing an annular combustor (300) for a gas turbine engine (20), comprising the steps of:
identifying one or more hot zones (706, 707, 708) in the combustion chamber (302) that have a higher temperature than one or more cold zones (701, 702, 703) in the combustion chamber;
identifying a nominal shape of a surface of the annular combustor defined by one or more axisymmetric combustor panels (600) arranged circumferentially;
providing at least one non-axisymmetric heat-shield panel (400);
positioning a portion of the non-axisymmetric heat shield panel closer to the combustion chamber than nominal near one of the cold zones; and
positioning a portion of the non-axisymmetric heat shield panel further from the combustion chamber than nominal near one of the hot zones.
